# EUROPÄISCHE PATENTSCHRIFT

(11) **EP 0 347 587 B1**
(45) Veröffentlichungstag und Bekanntmachung des Hinweises auf die Patenterteilung: **17.08.1994**
(21) Anmeldenummer: 89109003.7
(22) Anmeldetag: 19.05.1989
(51) Int. Cl.: F16J 15/32

(54) **Wellendichtungsring**
Shaft sealing ring
Anneau d'étanchéité pour axe

(30) Priorität: 24.06.1988 DE 3821353
(43) Veröffentlichungstag der Anmeldung: 27.12.1989
(73) Patentinhaber: GOETZE Elastomere GmbH, D-51379 Leverkusen-Opladen (DE)
(72) Erfinder: Bernd, Stephan, D-5630 Remscheid-Lennep (DE)

(56) Entgegenhaltungen:
- WO-A-87/06991
- DE-A- 3 534 459
- DE-C- 3 217 118
- GB-A- 2 073 845
- US-A- 2 635 907
- US-A- 3 380 745

## Beschreibung

Die Erfindung betrifft einen Wellendichtungsring mit einem relativ kleinen radialen Bauraum zur Abdichtung mit gegebenenfalls sehr hohen Drehzahlen, insbesondere exzentrisch laufenden Wellen in insbesondere mechanisch angetriebenen Ladern zur Aufladung von Verbrennungskraftmaschinen, bestehend aus einem Polytetrafluorethylenring mit einem Radialschenkel am Innenumfang, der zur Dichtlippe abgebogen auf der Welle abdichtend aufliegt, und einem den Haftteil bildenden Axialschenkel am Außenumfang, in dessen von der inneren Mantelfläche begrenztem Raum ein metallischer Trägerring eingepreßt ist.

Aus beispielsweise der DE-A-3.217.118 ist eine Dichtungsanordnung für Wellen bekannt, die aus einem im Querschnitt rechtwinkligen Ring aus glasfaserverstärktem Polytetrafluorethylen, einem Elastomerring und einem bevorzugt metallischen Trägerring besteht. Der Ring bildet mit seinem Radialschenkel die auf der Welle aufliegende Dichtlippe und mit seinem Axialschenkel am Außenumfang den Haftteil, wobei der Elastomerring auf der äußeren Mantelfläche des Axialschenkels aufliegt, während der metallische Trägerring in den von der inneren Mantelfläche des Axialschenkels begrenzten Raum eingepreßt ist.

Nachteilig ist in diesem Fall die geringe Flexibilität des in radialer Richtung auf der Welle aufliegenden Radialschenkels des Dichtungsringes, so daß praktisch schon kleine Wellenschläge der Welle durch den Dichtungsring nicht mehr ausgeglichen werden können. Insbesondere aber sind solche Dichtungskonstruktionen nicht zur Abdichtung exzentrisch laufender Wellen bei mechanisch angetriebenen Ladern zur Aufladung von Verbrennungskraftmaschinen geeignet.

Generell bestehen Wellendichtungsringe mit einer Dichtlippe aus Polytetrafluorethylen bevorzugt aus einer Polytetrafluorethylenscheibe, die an ihrem Innenumfang der Dichtlippe abgebogen auf der rotierenden Welle aufliegt, und die im Bereich ihres Außenumfanges in ihrem Haftteil durch Einspannen zwischen die radialen Schenkel eines Gehäuseringes und eines Klemmringes und/oder durch Kleben oder Anvulkanisieren mit dem Gehäusering verbunden ist. Die Radialkraft, mit der die Dichtlippe auf der Welle aufliegt, ist durch die Verformung der Dichtscheibe am Innenumfang bestimmt, und sie kann durch einen aufliegenden Schraubenfederring verstärkt sein.

Vor allem wegen der guten Medien- und Temperaturbeständigkeit und wegen des geringen Reibwertes von Polytetrafluorethylen können derartige Wellendichtungsringe besonders gut an schwierigen Dichtstellen mit hoher Reibbelastung, Medienbelastung und/oder Temperaturbelastung eingesetzt werden. Andererseits ist Polytetrafluorethylen nur wenig elastisch und relativ verformungssteif, seine Verbindung mit anderen Werkstoffen durch Kleben und/oder Anvulkanisieren kann nur aufwendig erfolgen, und Formteile aus Polytetrafluorethylen verändern durch plastisches Fließen unter Druckbelastung ihre Form. Darüber hinaus vergrößern die zum Einspannen der Dichtscheibe aus Polytetrafluorethylen erforderlichen Klemmringe und Gehäuseringe den radialen Bauraum des gesamten Dichtungsringes, der daraufhin nicht für alle Anwendungsfälle geeignet ist.

In beispielsweise einem mechanisch angetriebenen Lader zur Aufladung von Verbrennungskraftmaschinen ist die Dichtlippe der Reibung einer sehr schnellaufenden, mit Drehzahlen von gegebenenfalls über 11.000 Min.⁻¹ ausgesetzt, und zugleich schwingt der gesamte Wellendichtungsring entsprechend dem exzentrischen Lauf der rotierenden Welle mit. Die entstehenden, sehr hohen Reibungstemperaturen können Zersetzungen des abzudichtenden Öles mit unerwünschten Ölkohleablagerungen bewirken, und das Abheben der Dichtlippe von der Welle bei den hohen Beschleunigungskräften kann zu Undichtigkeiten sowohl im dynamischen Dichtbereich als auch im eingeklemmten, lediglich statisch beanspruchten Haftteil der Dichtscheibe durch Lockerungen ihres Sitzes führen, wobei gegebenenfalls sogar Risse und Brüche am Knickpunkt der die Dichtlippe tragenden Membran entstehen. Der in diesem Anwendungsfall erforderliche kleine radiale Bauraum kann darüber hinaus durch Wellendichtungsringe mit eingeklemmter Dichtscheibe aus Polytetrafluorethylen nicht erreicht werden.

Der vorliegenden Erfindung liegt daher die Aufgabe zugrunde, einen Wellendichtungsring gemäß Oberbegriff des Hauptpatentanspruches zu schaffen, der auch unter hohen Belastungen in beispielsweise Ladern für Verbrennungskraftmaschinen mit einer sehr schnell exzentrisch laufenden Welle einsetzbar ist. Der Ring soll zugleich einfach und kostengünstig herstellbar sein.

Erfindungsgemäß wird diese Aufgabe durch einen Wellendichtungsring aus Polytetrafluorethylen gelöst, dessen Axialschenkel und Radialschenkel durch eine spanabhebende Bearbeitung aus einem massiven Polytetrafluorethylenrohling herausgearbeitet oder durch Sintern in einer Form aus Polytetrafluorethylenpulver hergestellt sind, wobei die radiale Wandstärke des Axialschenkels etwa 1/3 bis 1/2 so groß ist wie die radiale Wandstärke des Dichtungsringes, und wobei die axiale Wandstärke des Radialschenkels zwischen 0,6 und 1 mm liegt.

Da jetzt der erfindungsgemäße Dichtungsring massiv aus Polytetrafluorethylen besteht, wird auf die sonst üblichen Gehäuseringe und Klemmringe beziehungsweise das aufwendige Kleben und/oder Anvulkanisieren verzichtet. Der Ring besitzt dadurch eine geringe radiale Bauhöhe bei geringen Herstellungskosten. Zum Einbau in die Dichtstelle braucht jetzt nur noch der Ring mit seinem den Haftteil bildenden Axialschenkel in die Maschinenteilaufnahmebohrung eingepreßt zu werden. Damit ein guter Preßsitz in der Aufnahmebohrung zustandekommt, entsprechen die Abmessungen des Axialschenkels der Form der Aufnahmebohrung, sein Querschnitt ist etwa rechteckig, und seine radiale Wandstärke ist auch zur Verstärkung des Dichtungsringes relativ groß und liegt bei etwa einem Drittel bis einer Hälfte der gesamten radialen Wandstärke des Ringes.

Der die Dichtlippe bildende Radialschenkel des Dichtungsringes erstreckt sich in etwa über zwei Drittel bis zur Hälfte der gesamten radialen Wandstärke des Dichtungsringes. Seine Länge ist dabei so auf den Durchmesser der abzudichtenden Welle abgestimmt, daß sich beim Aufschieben auf einen entsprechenden Werkzeugdorn oder bei der Montage beim Aufschieben auf die Welle durch Verformung des radialen Schenkels zu einer Dichtlippe seine radiale Anpreßkraft einstellt. Im Betrieb werden jetzt die durch den exzentrischen Wellenlauf erzeugten Beschleunigungskräfte nicht nur von der Dichtlippe aufgenommen, sondern die Kräfte werden in den mit dem Radialschenkel verbundenen Haftteil weitergeleitet. Der relativ große massige Axialschenkel wirkt dabei als elastischer Schwingungsdämpfer. Die auf den Radialschenkel wirkenden Verformungskräfte werden verringert, und die Gefahr von Rißbildungen und Brüchen der Radialschenkel bei extremen Belastungen wird wesentlich herabgesetzt. Dadurch kann auch die axiale Wandstärke des Radialschenkels relativ klein sein und braucht nur bei etwa 0,6 bis 1,0 mm zu liegen. Der Radialschenkel wird dadurch flexibler und leichter zerstörungsfrei deformierbar, und sowohl dadurch als auch durch das geringere Gewicht der Dichtlippe wird die Gefahr unerwünschter Dichtlippendeformierungen durch Beschleunigungskräfte zusätzlich verringert.

Zur Verbesserung des Preßsitzes und zur Verbesserung der statischen Abdichtung kann zusätzlich ein Elastomerring verwendet werden, der entweder auf der äußeren Mantelfläche des Ringes aufliegt oder in einer Nut in der äußeren Mantelfläche des Ringes angeordnet ist. Zur weiteren Verbesserung des Sitzes und der Steifigkeit des Haftteiles kann am Innenumfang des Haftteiles ein metallischer Trägerring in den vom Axialschenkel begrenzten Innenraum eingepreßt sein. Dieser Trägerring ist bevorzugt ein radial nach außen spreizender Federring, der das Haftteil mit verstärkter Kraft in die Maschinenteilaufnahme einpreßt.

Der erfindungsgemäße Dichtungsring ist dadurch unter extremen Belastungsverhältnissen mit einem exzentrischen Wellenlauf ohne Gefahr von Zerstörungen mit verbesserter Lebensdauer einsetzbar. Er besitzt einen kleinen radialen Bauraum und ist vor allem durch Einsparung separater Zusatzbauteile und die Einsparung aufwendiger Verfahrensschritte wirtschaftlich herstellbar.

Die Erfindung wird durch die drei Abbildungen näher erläutert, welche Querschnittsbilder durch drei bevorzugte Ausführungsformen des erfindungsgemäßen Wellendichtungsringes zeigen:

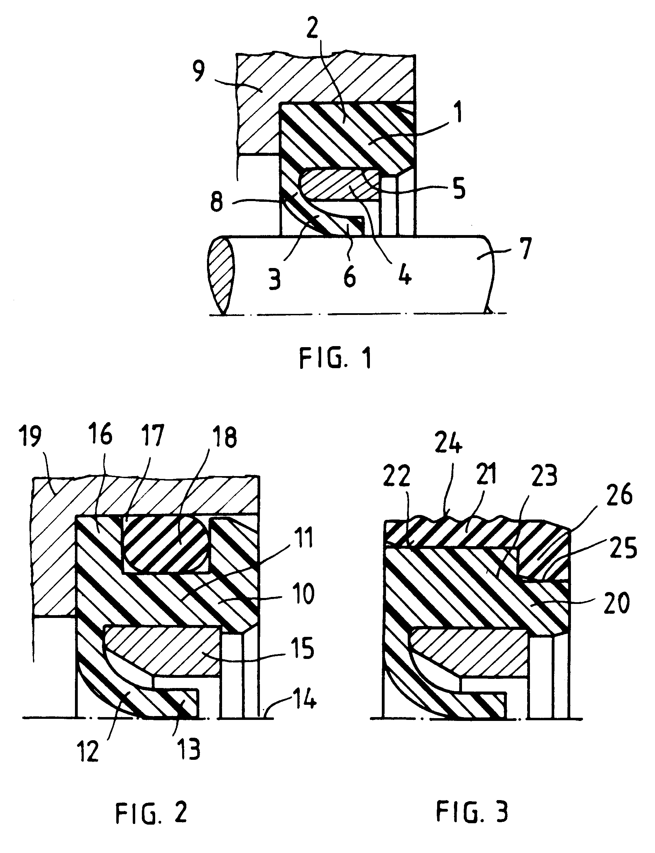

In Figur 1 ist 1 der Dichtungsring aus massivem Polytetrafluorethylen, dessen Axialschenkel 2 und Radialschenkel 3 spanabhebend aus einem Polytetrafluorethylenrohling herausgearbeitet sind. Der Axialschenkel 2 bildet den Haftteil des Dichtungsringes 1 zum Einpressen in das Maschinenteilaufnahmegehäuse 9. Die radiale Wandstärke des Haftteiles 2 beträgt etwa ein Drittel der gesamten radialen Wandstärke des Dichtungsringes 1 vor dem Einbau. In den vom Axialschenkel 2 am Innenumfang begrenzen Innenraum 5 ist ein Metallring 4 eingepreßt, der den Haftteil 2 versteift und aufgrund seiner Federkraft radial nach außen in das Aufnahmegehäuse 9 preßt. Der Radialschenkel 3 liegt am Innenumfang zur Dichtlippe 6 auf der Welle 7 mit entsprechender Radialkraft auf. Der Radialschenkel 3 besitzt eine axiale Wandstärke von etwa 0,8 mm. Im Betrieb bei mit hoher Drehzahl exzentrisch laufender Welle 7 macht der Dichtungsring 1 nur die exzentrischen Schwingbewegungen der Welle 7 mit. Durch die wechselnden Bewegungen des gesamten Ringes 1 werden Beschleunigungskräfte erzeugt, die deformierend an der Dichtlippe 6 beziehungsweise dem Radialschenkel 3 wirken. Die Deformationskräfte werden über den Radialschenkel in den Axialschenkel 2 geleitet und von dort gedämpft. Die Deformierung des Radialschenkels 3 wird begrenzt, so daß die Gefahr von Rißbildungen oder Brüchen des Radialschenkels 3, insbesondere an seinem Knickpunkt 8, wesentlich verringert wird.

Der Dichtungsring 10 der Figur 2 besteht analog wie der Dichtungsring 1 der Figur 1 massiv aus Polytetrafluorethylen, dessen Axialschenkel 11 und Radialschenkel 12 aus einem Polytetrafluorethylenrohling spanabhebend herausgearbeitet sind. Der Radialschenkel 12 ist am Innenumfang zu einer Dichtlippe 13 abgebogen, die auf der Welle 14 aufliegt. In den vom Axialschenkel 11 gebildeten Innenraum ist analog ein radial nach außen spannender Trägerring 15 aus Metall eingepreßt. In die äußere Mantelfläche 16 des Axialschenkels 11 ist eine Nut 17 spanabhebend eingearbeitet, in der ein Elastomerring 18 angeordnet ist. Beim Einbau in das Maschinenteilaufnahmegehäuse 19 wird der Elastomerring 18 elastisch verformt und verbessert die statische Abdichtwirkung des Ringes 10 im Aufnahmegehäuse 19. Die dynamische Belastbarkeit ist etwa gleich der Belastbarkeit des Ringes 1 aus Figur 1.

Der Ring 20 der Figur 3 entspricht in seiner Form und seinem Verhalten den Ringen 1 und 10 der Figuren 1 und 2. Zum Unterschied besitzt dieser Ring 20 einen Elastomerring 21, der über die äußere Mantelfläche 22 des Axialschenkels 23 gezogen ist. Die äußere Mantelfläche 24 des Elastomerringes 21 ist kammartig profiliert und wirkt als Dichtprofil. Der Elastomerring 21 ist durch seine elastische Spannung und durch einen in eine Nut 25 des Axialschenkels 23 eingespannten Radialschenkel 26 mit dem Dichtungsring 20 verbunden.

## Patentansprüche

1. Wellendichtungsring (1,10,20) mit einem relativ kleinen radialen Bauraum zur Abdichtung mit gegebenenfalls sehr hohen Drehzahlen, insbesondere exzentrisch laufenden Wellen in insbesondere mechanisch angetriebenen Ladern zur Aufladung von Verbrennungskraftmaschinen, bestehend aus einem Polytetrafluorethylenring (1,10,20) mit einem Radialschenkel (3,12) am Innenumfang, der zur Dichtlippe (13,6) abgebogen auf der Welle (7,14) abdichtend aufliegt, und einem den Haftteil bildenden Axialschenkel (2,11,23) am Außenumfang, in dessen von der inneren Mantelfläche begrenztem Raum (5) ein metallischer Trägerring (4,15) eingepreßt ist, dadurch gekennzeichnet, daß der Radialschenkel (3,12) und der Axialschenkel (2,11,23) durch eine spanabhebende Bearbeitung aus einem massiven Polytetrafluorethylenrohling herausgearbeitet oder durch Sintern in einer Form aus Polytetrafluorethylenpulver hergestellt sind, wobei die radiale Wandstärke des Axialschenkels (2,11,23) etwa 1/3 bis 1/2 so groß ist wie die radiale Wandstärke des Dichtungsringes (1,10,20), und wobei die axiale Wandstärke des Radialschenkels (3,12) zwischen 0,6 und 1,0 mm liegt.

2. Wellendichtungsring nach Anspruch 1, dadurch gekennzeichnet, daß an der äußeren Mantelfläche des Axialschenkels (2,11,23) ein beim Einbau unter Druck verformbarer Elastomerring (18,21) anliegt.

3. Wellendichtungsring nach Anspruch 2, dadurch gekennzeichnet, daß in der äußeren Mantelfläche des Axialschenkels (2,11,23) eine Nut (17,25) vorgesehen ist, in der der beim Einbau unter Druck verformbare Elastomerring (18,21) angeordnet ist.

4. Wellendichtungsring nach mindestens einem der Ansprüche 1 bis 3, dadurch gekennzeichnet, daß der Trägerring (4,15) ein radial nach außen spannender Federring ist.

## Claims

1. Shaft sealing ring (1, 10, 20) with a relatively small radial construction area for sealing optionally at very high rotational speeds, in particular eccentrically running shafts in especially mechanically driven chargers for charging internal combustion machines, comprising a polytetrafluor ethylene ring (1, 10, 20) with a radial leg (3, 12) on its inner periphery, which is bent towards the sealing lip (13, 6) and supported on the shaft (7, 14) to form a seal, and with an axial leg (2, 11, 23) on its outer periphery forming the adhesive part, into the area (5) of which defined by the inner shell surface a metallic support ring (4, 15) is pressed, characterised in that the radial leg (3, 12) and the axial leg (2, 11, 23) are machined from a solid polytetrafluor ethylene blank or are produced by sintering in a mould from polytetrafluor ethylene powder, wherin the radial wall thickness of the axial leg (2, 11, 23) is about 1/3 to 1/2 as large as the radial wall thickness of the sealing ring (1, 10, 20), and wherein the axial wall thickness of the radial leg (3, 12) lies between 0.6 and 1.0 mm.

2. Shaft sealing ring according Claim 1, characterised in that an elastomer ring (18, 21), which may be shaped under pressure during installation, abuts the outer shell surface of the axial leg (2, 11, 23).

3. Shaft sealing ring according to Claim 2, characterised in that a groove (17, 25), in which the elastomer ring (18, 21), which may be shaped under pressure during installation, is disposed, is provided in the outer shell surface of the axial leg (2, 11, 23).

4. Shaft sealing ring according to at least one of Claims 1 to 3, characterised in that the support ring (4, 15) is a radially outward bending spring ring.

## Revendications

1. Anneau d'étanchéité d'arbre (1,10,20) avec un espace de montage radial relativement petit pour faire l'étanchéité, avec éventuellement des vitesses de rotation élevées, en particulier des arbres tournant de facon excentrique dans des compresseurs en particulier entraînés mécaniquement pour l'alimentation de moteurs à combustion interne, constitué d'un anneau (1,10,20) en polytétrafluoréthylène avec une bride radiale (3,12) sur la périphérie intérieure, qui repose de facon étanche sur l'arbre (7,14) et courbée par rapport à la lèvre d'étanchéité (13,6) et avec une bride axiale (2,11,23) sur la périphérie extérieure, formant la partie d'accrochage dans l'espace (5) de laquelle, délimité par les surfaces d'enveloppe intérieures, est emmanché un anneau de support métalique (4,15), caractérisé en ce que la bride radiale (3,12) et la bride axiale (2,11,23) sont dégrossées par un usinage par enlèvement de copeaux dans une ébauche massive en polytétrafluoréthylène ou produites par frittage de poudre de polytétrafluoréthylène dans une forme, l'épaisseur radiale de la bride axiale (2,11,23) se situant environ entre le tiers et la moitié de l'épaisseur radiale de l'anneau d'étanchéité (1,10,20) et l'épaisseur axiale de la bride radiale (3,12) se situant entre 0,6 et 1,0 mm.

2. Anneau d'étanchéité d'arbre selon la revendication 1, caractérisé en ce qu'un anneau en élastomère (18,21) déformable lors du montage sous pression repose sur la surface d'enveloppe extérieure de la bride axiale (2,11,23).

3. Anneau d'étanchéoté d'arbre selon la revendication 2, caractérisé en ce qu'une rainure (17,25) est prévue sur la surface d'enveloppe extérieure de la bride axiale (2,11,23), dans laquelle rainure est disposée l'anneau en élastomère (18,21) déformable lors du montage sous pression.

4. Anneau d'étanchéité d'arbre selon au moins l'une des revendications 1 à 3, caractérisé en ce que l'anneau de support (4,15) est une rondelle élastique exercant une contrainte radiale vers l'extérieur.
